(19) Europäisches Patentamt
European Patent Office
Office européen des brevets

(11) **EP 2 958 723 B1**

(12) **EUROPÄISCHE PATENTSCHRIFT**

(45) Veröffentlichungstag und Bekanntmachung des Hinweises auf die Patenterteilung:
**24.10.2018 Patentblatt 2018/43**

(21) Anmeldenummer: **14706781.3**

(22) Anmeldetag: **19.02.2014**

(51) Int Cl.:
*B29B 9/06* (2006.01)    *B29B 9/12* (2006.01)
*B29C 47/00* (2006.01)    *B29C 47/88* (2006.01)
*B29C 47/92* (2006.01)    *B29B 9/16* (2006.01)
*B29C 47/06* (2006.01)    *B29C 47/26* (2006.01)

(86) Internationale Anmeldenummer:
**PCT/EP2014/000446**

(87) Internationale Veröffentlichungsnummer:
**WO 2014/127914 (28.08.2014 Gazette 2014/35)**

(54) **QUETSCHWALZENGRANULATOR UND VERWENDUNG DESSELBEN**

SQUEEZING-ROLL GRANULATOR AND USE THEREOF

GRANULATEUR À CYLINDRES BROYEURS ET SON UTILISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.02.2013 DE 102013003032**

(43) Veröffentlichungstag der Anmeldung:
**30.12.2015 Patentblatt 2015/53**

(73) Patentinhaber: **Maag Automatik GmbH**
**63762 Großostheim (DE)**

(72) Erfinder:
- **DAHLHEIMER, Stefan**
**63801 Kleinostheim (DE)**
- **MEIDHOF, Helmuth**
**63762 Großostheim (DE)**

- **NIEDER, Marco**
**64409 Messel (DE)**

(74) Vertreter: **Spranger, Stephan**
**Spranger + Burger**
**Patentanwälte**
**Widenmayerstrasse 28**
**80538 München (DE)**

(56) Entgegenhaltungen:
| | |
|---|---|
| EP-A1- 1 066 938 | EP-A1- 1 772 250 |
| EP-A2- 0 143 414 | EP-A2- 0 240 906 |
| EP-A2- 0 345 987 | WO-A1-2012/157392 |
| DE-A1- 2 554 239 | DE-A1- 3 145 614 |
| DE-B1- 2 627 263 | JP-A- S59 081 120 |
| JP-A- 2008 068 517 | |

EP 2 958 723 B1

**Beschreibung**

Die Erfindung betrifft einen Quetschwalzengranulator der eine zylindrische Andruckwalze und eine verzahnte Quetschwalze aufweist, wobei die Verzahnung der Quetschwalze Zahnflanken aufweist, die zwischen einem Zahnfußbereich und einem Zahnkopfbereich angeordnet sind, und wobei der Zahnfußbereich einen Außendurchmesser aufweist, der geringer ist als der Außendurchmesser des Zahnkopfbereichs.

Eine derartige Vorrichtung eines Quetschwalzengranulators zum Granulieren von Strängen aus Kunststoffmaterial und ähnlichen plastischen Massen ist aus der Druckschrift DE 31 45 614 C2 bekannt, wobei die Stränge aus Kunststoffmaterial und ähnlichen plastischen Massen nachfolgend als Kunststoffstränge bezeichnet werden, insbesondere wenn sie einen Hüllschlauch mit eingeschlossener Füllmasse aufweisen. Die bekannte Quetschwalzenvorrichtung weist eine Zuführeinrichtung für wenigstens einen äußerlich verfestigten Strang auf, die zu einem um parallele Achsen gegenläufig antreibbaren Walzenpaar führt. Von dem Walzenpaar ist wenigstens eine Walze aus gegenüber dem Kunststoffmaterial hartem Material hergestellt und weist im Wesentlichen axial verlaufende umfangsverteilte Vorsprünge auf. Radial äußere Enden der Quetschwalze arbeiten mit einer glatten zylindrischen Oberfläche der Andruckwalze zusammen. Dabei sollen die radial äußeren Flächenbereiche der Vorsprünge an der Andruckwalze annähernd zum Anliegen kommen, so dass die Walze in dieser Lage unter Vorspannung in einem Anschlag gehalten ist und das Kunststoffmaterial des Kunststoffstranges in Granulate zerteilt wird.

Ein Nachteil dieser Vorrichtung ist es, dass sie nicht in der Lage ist Granulatkissen aus Hüllbeuteln mit einer Füllmasse herzustellen, wie sie in vielfachen Variationen für unterschiedliche Anwendungszwecke benötigt werden.

Für diesen Bedarf sind aus den Druckschriften DE 103 47 908 A1, DE 38 32 566 C2 und aus der Auslegeschrift DE 1 297 525 A Verfahren und Vorrichtungen bekannt, die ein Coextrusionsverfahren einsetzen, um einen mehrschichtigen Kunststoffbehälter aus schlauchförmig coextrudierten Kunststoffmaterialien herzustellen, der zu Behältern geformt wird, wobei ein Fülldorn ermöglicht, nach dem Coextrudieren des Behälters eine Füllmasse in den coextrudierten und ausgeformten Behälter einzubringen.

Der Nachteil derartiger Vorrichtungen, die coextrudierte Behälter mit anschließender Befüllung durch einen Fülldorn ermöglichen, ist der komplexe Aufbau der Vorrichtung zum Ausformen der coextrudierten Behälter unter anschließendem schrittweisem Befüllen der Behälter durch einen Fülldorn und einem abschließenden Verschließen des Behälters.

Die deutsche Auslegeschrift DE 26 27 263 B1 beschreibt eine Vorrichtung zum Abkühlen und Granulieren von Strängen aus thermoplastischen Kunststoffen, welche als Teil eines Einzugswalzenpaares eine geriffelte Einzugswalze aufweist.

Die europäische Veröffentlichungsschrift EP 1 066 938 A1 beschreibt eine Vorrichtung zum Granulieren von Kunststoffsträngen, welche ebenfalls als Teil eines Einzugswalzenpaares eine geriffelte Einzugswalze aufweist.

Die japanische Schrift JP S59 081120 A zeigt Quetschwalzen mit abgerundeten Übergängen zwischen jeweiligen Zahnfuß-, Zahnflanken- und Zahnkopfbereichen.

Die europäische Patentanmeldung EP 0 143 414 A2 zeigt eine gezahnte Pressrolle mit abgerundeten Übergängen zwischen jeweiligen Zahnfuß-, Zahnflanken- und Zahnkopfbereichen.

Es ist die Aufgabe der vorliegenden Erfindung, einen Quetschwalzengranulator mit einer zylindrischen Andruckwalze und einer verzahnten Quetschwalze zu schaffen, der in der Lage ist Granulatkissen zu formen und abzudichten, die eine Umhüllung mit einer portionierten Füllmasse aufweisen.

Diese Aufgabe wird erfindungsgemäß mit einem Quetschwalzengranulator mit den Merkmalen gemäß dem Anspruch 1 gelöst. Bevorzugte Ausführungsformen der Erfindung sind in den Unteransprüchen definiert.

Eine Ausführungsform des erfindungsgemäßen Quetschwalzengranulators weist eine zylindrische Andruckwalze und eine verzahnte Quetschwalze auf, wobei die Verzahnung der Quetschwalze Zahnflanken aufweist, die zwischen einem Zahnfußbereich und einem Zahnkopfbereich angeordnet sind, und wobei der Zahnfußbereich einen Außendurchmesser aufweist, der geringer ist als der Außendurchmesser des Zahnkopfbereichs, und wobei der Zahnkopfbereich der Quetschwalze drei Quetschzonen mit einer Mittenquetschzone aufweist, die unterschiedliche Abstände zu der zylindrischen Andruckwalze definieren mit einem minimalen Abstand im Bereich der Mittenquetschzone, und wobei die Kontur der Zahnflanken und des Zahnfußbereichs der Quetschwalze in Zusammenwirken mit der Kontur der zylindrischen Andruckwalze einen maximalen Querschnitt von zu formenden Granulatkissen definiert, und wobei das maximale Füllvolumen zusätzlich von der Breite zu der das Granulatkissen gequetscht wird abhängt.

Der Vorteil des erfindungsgemäßen Quetschwalzengranulators ist, dass er mit einer einzigen Quetschwalzenumdrehung eine Vielzahl von Füllmassen in Granulatkissen portioniert und mediendicht einschließen kann, was mit dem bisher bekannten Quetschwalzengranulator, der lediglich vorverfestigte Stränge zu Kunststoffgranulaten auftrennt, nicht möglich ist. Auch die aus den oben zitierten Druckschriften bekannten Vorrichtungen zum Coextrudieren von mehrschichtigen Behältern mit Auffüllen der Behälter über einen Fülldom und anschließendem Verschließen der Behälter sind nicht in der Lage eine Massenproduktion an präzise portionierten Füllmassen in einer Außenhülle mediendicht zu ermöglichen.

Gemäß der Erfindung ist es ferner vorgesehen, dass sich der Zahnfußbereich von einem Ende einer abfallenden Zahnflanke zu einem Anfang einer ansteigenden Zahnflanke erstreckt und der Zahnkopfbereich entsprechend von einem Ende einer ansteigenden Zahnflanke zu einem Anfang einer abfallenden Zahnflanke erstreckt. Die drei Quetschzonen des Zahnkopfbereichs weisen eine Eingangsquetschzone auf, die in einer Zufuhrrichtung angeordnet ist, eine Ausgangsquetschzone, die in einer Abfuhrrichtung angeordnet ist, und die Mittenquetschzone, die zwischen Eingangs- und Ausgangsquetschzone angeordnet ist. Dabei werden die Eingangs- und Ausgangsquetschzonen der Verzahnung von den Zahnflanken begrenzt. Außerdem definiert die Eingangsquetschzone einen sich zu der Mittenquetschzone hin vermindernden Abstand zu der Andruckwalze und die Ausgangsquetschzone einen sich von der Mittenquetschzone aus vergrößernden Abstand zur Andruckwalze. mit einem Anstiegswinkel $\beta_e$ für die Eingangsquetschzone zwischen 2° und 8° und einem Abfallwinkel $\beta_a$ für die Ausgangsquetschzone zwischen 2° und 8°.

Erfindungsgemäß ist damit der Vorteil verbunden, dass die Füllmasse bei den aufeinander abwälzenden Oberflächen der Andruckwalze und den Quetschzonen der Zahnkopfbereiche der Quetschwalze die Füllmassen eines zugeführten, mit Füllmassen gefüllten Hüllschlauch derart verdrängt werden können, dass in der Eingangsquetschzone eine mediendichte Verschweißung des Hüllmaterials zu einer Eingangsdichtnaht auftritt und das Gleiche auch in Ausgangsquetschzonen des Zahnkopfbereichs erfolgt, in denen mediendichte Ausgangsdichtnähte gebildet werden. In der Mittenquetschzone, die einen minimalen Abstand zu der Andruckwalze beim Abwälzen der Oberfläche der zylindrischen Andruckwalze auf dem Zahnkopfbereich der Quetschwalze aufweist, entsteht ein Sollbruchnahtprofil, bei dem aneinandergrenzende Granulatkissen voneinander getrennt werden können.

Dazu weist in einer weiteren Ausführungsform der Erfindung der Quetschwalzengranulator eine Zufuhrvorrichtung, zum Zuführen eines Hüllschlauchs mit coextrudierter Füllmasse auf. Bei dem erfindungsgemäßen Quetschwalzengranulator kann folglich nicht nur eine Mehrschichtigkeit einer Außenhülle durch Coextrusion von Hüllmaterialien erreicht werden, sondern vor allem wird für einen vorzugsweise einschichtigen Hüllschlauch, mit dem zusammen eine Füllmasse coextrudiert ist, in dem Walzenpaar aus Andruckwalze und Quetschwalze mit der speziellen Ausbildung des Zahnkopfbereichs in drei Quetschzonen eine Vorrichtung bereitgestellt, die Granulatkissen füllen und gleichzeitig mediendicht verschließen kann. Dabei weisen die Granulatkissen Portionen der Füllmasse auf, die von einer Außenhülle aus dem Material des Hüllschlauchs umhüllt sind.

Ein Vorteil eines derartigen Quetschwalzengranulators mit einem extrudierten Hüllschlauch und der in den Hüllschlauch eingeschlossenen coextrudierten Füllmasse erreicht einen Massendurchsatz und Ausstoß an Granulatkissen, der mit herkömmlichen Anlagen zum Herstellen und Befüllen von Behältnissen nicht erreichbar ist.

Um das Einbringen von Dichtnähten weiter zu verbessern, weist in einer weiteren Ausführungsform der Erfindung der Zahnkopfbereich eine gefaste Eingangskante zu der Eingangsquetschzone und eine gefaste Ausgangskante von der Ausgangsquetschzone auf. Durch diese angebrachten Fasen an der Eingangskante und der Ausgangskante wird das Ausbilden von Dichtnähten dahingehend verbessert, dass ein Beschädigen des extrudierten Hüllschlauchs mit coextrudierter Füllmasse durch die Eingangskanten oder die Ausgangskanten der Quetschzonen vermieden wird.

In einer weiteren Ausführungsform der Erfindung ist es vorgesehen, dass die Mittenquetschzone des Zahnkopfbereichs der Quetschwalze als Sollbruchnahtprofil eine Abflachung aufweist. Diese Abflachung, die einen minimalen Abstand zur Zylinderoberfläche der Andruckwalze aufweist, ermöglicht eine Sollbruchnaht von minimaler Stärke zwischen zwei aneinanderhängenden Granulatkissen.

Bei einer weiteren Ausführungsform der Erfindung weist die Mittenquetschzone des Zahnkopfbereichs der Quetschwalze als Sollbruchnahtprofil eine Stufe auf. Eine derartige Stufe mit minimalem Abstand zu der Zylinderoberfläche der Andruckwalze wirkt wie eine Schneidkante, so dass bei geringster Belastung diese Sollbruchnaht für ein Trennen von aneinanderhängenden Granulatkissen geeignet ist.

Weiterhin ist es vorgesehen, dass die Mittenquetschzone des Zahnkopfbereichs der Quetschwalze einen über die Eingangsquetschzone und die Ausgangsquetschzone herausragenden Stegquerschnitt aufweist. Ein derartiger Stegquerschnitt verringert zusätzlich den Abstand zwischen der Zylinderoberfläche der Andruckwalze, so dass auch in dieser Ausführungsform die Mittenquetschzone wie ein Trennmesser wirken kann, das bereits bei geringer Belastung der entstehenden Sollbruchnaht ein Trennen der Granulatkissen ermöglicht.

Weiterhin ist es vorgesehen, dass die Ausgangsquetschzone länger ist als die Eingangsquetschzone. Daraus ergibt sich der Vorteil, dass die Ausgangsquetschnaht breiter oder länger ist als die Eingangsquetschnaht, so dass die Gefahr der Beschädigung der Ausgangsdichtnaht beim Trennen eines Granulatkissens von einem nachfolgenden Granulatkissen noch während der Quetschphase der Quetschwalze deutlich vermindert ist.

Weiterhin ist es vorgesehen, dass die Quetschwalze und die Andruckwalze eine Metalllegierung aufweisen, wobei die zylindrische Oberfläche der Andruckwalze und die Zahnkopfbereiche der Quetschwalze verschleißfeste Oberflächen, vorzugsweise Oberflächen von Hartmetallbeschichtungen oder Keramikbeschichtungen oder gehärtete Oberflächen aufweisen. Eine Härtung der Oberflächen bzw. der Zahnkopfbereiche der Quetschwalze wird vorzugsweise mittels eines induktiven Härtungsverfahrens erreicht, bei dem die Oberflächen der Zahnkopfbereiche induktiv erhitzt und anschließend abgekühlt werden können. Andererseits ist es auch möglich, eine verbesserte Härte dadurch zu erreichen, dass Hartmetallbeschichtungen oder Keramikbeschichtungen wie Nitrid- oder Karbidschichten auf den Oberflächen vorgesehen werden. Je härter die Oberflächen ausgebildet sind, umso präziser können die definierten unterschiedlichen Abstände der drei Quetschzonen sich zwischen den Granulatkissen ausbilden.

Für den extrudierten Hüllschlauch sind thermoplastische Kunststoffe der Gruppe Polyamid (PA), Polypropylen (PP), Low Density Polyethylen (LDPE), Copolymer (COP) oder Ethylen-Vinylalkohol-Copolymer (EVOH), Ethylen-Vinyl-Acetat Copolymer (EVA) und Mischprodukte derselben, die Anteile von Polyolefinwachsen, Polyethylenwachsen, Polypropylenwachsen oder Fettsäurederivate aufweisen, von Vorteil, da derartige Hüllschläuche nicht nur ein einziges Material aufweisen, sondern mehrere Materialien, die beispielsweise einen erhöhten Schutz gegen Feuchtigkeit ermöglichen und durch Coextrusion miteinander zu einem mehrschichtigen Hüllschlauch verbunden sein können.

Die Quetschwalze kann in einer weiteren Ausführungsform der Erfindung ständig zumindest mit einem Teilbereich einer Mittenquetschzone der Verzahnung in einem minimalen Abstand zur zylindrischen Oberfläche der Andruckwalze stehen. Deshalb ist es vorgesehen, die Quetschwalze mit einer Schrägverzahnung auszustatten, wobei der Schrägverzahnungswinkel bzw. Spiralwinkel $\alpha$ von dem Außendurchmesser D der Quetschwalze und der Breite B der Quetschwalze sowie der Anzahl n der auf dem Außenumfang verteilten Verzahnungen der Quetschwalze abhängt.

Aus der Forderung, eine Zweipunktauflage zwischen der Außenverzahnung der Quetschwalze und der zylindrischen Oberfläche der Andruckwalze sicherzustellen, muss mindestens ein Teilbereich der Quetschwalzenverzahnung in einem minimalen Abstand gegenüber der zylindrischen Oberfläche der Andruckwalze angeordnet sein. Daraus ergibt sich für die Schrägwinkelverzahnung ein Spiralwinkel $\alpha$ aus arctan $\Pi D/nB$ ($\Pi$ ist die Kreiszahl Pi). Soll mehr als nur ein Zahnkopfbereich auf der Breite B der Quetschwalze den minimalen Abstand zur zylindrischen Andruckwalze aufweisen, so kann dieses durch einen Faktor, wie vorzugsweise 5 erreicht werden, so dass ein bevorzugter Bereich des Spiralwinkels $\alpha$ zwischen

$$\text{arctan } \Pi D/nB \leq \alpha \leq 5 \text{ arctan } \Pi D/nB \text{ liegt.}$$

Auch die maximalen Abmessungen der Granulatkissen sind von der Geometrie der Verzahnung und der Breite der Quetschwalze abhängig, so dass sich für die Länge l ein Quotient aus $\Pi D/n$ ergibt und für die Breite b der Granulatkissen einerseits ein Quotient aus B/N maßgeblich ist, wobei B die Breite der Quetschwalze und N die Anzahl von parallel der Quetschwalze zugeführten Hüllschläuchen mit coextrudierter Füllmasse ist und andererseits der Außendurchmesser d des Hüllschlauchs, mit dem eine Breite b der Granulatkissen von

$$b \leq \Pi d/2$$

erreicht werden kann.

Eine weitere Ausführungsform der Erfindung betrifft eine Granulieranlage mit einem Quetschwalzengranulator, wobei die Granulieranlage eine Extrusionsvorrichtung zum Coextrudieren von Füllmassen in Hüllschläuchen zu Kunststoffsträngen aufweist. Außerdem weist die Granulieranlage den Quetschwalzengranulator mit Zufuhrvorrichtung zum Zuführen der Kunststoffstränge zu einem Walzenpaar aus einer zylindrischen Andruckwalze und einer verzahnten Quetschwalze auf. Ferner ist die Quetschwalze mit einem Antrieb versehen und eine Auffangvorrichtung dient der Aufnahme der von dem Walzenpaar zu Granulatkissen portionierten Kunststoffstränge, wobei die Granulatkissen eine Außenhülle aufweisen die mit einer Füllmasse gefüllt ist. Schließlich koordiniert eine Steuer- und Regelvorrichtung der Granulieranlage dieser Ausführungsform den Antrieb der Quetschwalze mit der Extrusionsgeschwindigkeit der Kunststoffstränge.

Eine derartige Granulieranlage hat den Vorteil, dass die Zuführung der Hüllschläuche mit Füllmassen in Form eines Kunststoffstrangs der Extrusionsgeschwindigkeit einer zugehörigen Extrusionsvorrichtung über den Antrieb der Quetschwalze in allen Betriebsphasen anpassbar ist. An dem Ausgang der Extrusionsvorrichtung kann bis zum Eingangsspalt des Walzenpaares deshalb ein relativ kurzes Verbindungsstück beispielsweise in Form einer den Kunststoffstrang temperierenden Gleitstrecke vorgesehen werden.

Auf dieser Gleitstrecke können mehrere parallel extrudierte Kunststoffstränge auf eine Verarbeitungstemperatur, die für ein Zusammenpressen des Hüllschlauchs im Bereich der Eingangsquetschzone zu Eingangsdichtnähten und in der Ausgangsquetschzone zur Ausbildung von Ausgangsdichtnähten erforderlich ist, temperiert werden. Diese optimierte Verarbeitungstemperatur kann durch Einleiten von temperiertem Wasser in die Zufuhrvorrichtung erfolgen oder durch entsprechende Optimierung der Temperierung des Walzenpaares. Auch ist es möglich, die parallel verlaufenden Stränge auf einer Zufuhrstrecke durch ein entsprechend temperiertes Wasserbad zu leiten.

Bei kurzen Zufuhrstrecken zwischen Extrusionsvorrichtung und Walzenpaar kann das Wasserbad der Kühlung der Kunststoffstränge auf die erforderliche Schweißtemperatur beim Quetschvorgang dienen, während bei langen Zufuhrstrecken von der Extrusionsvorrichtung zu den Quetschwalzen kann ein Aufheizen beispielsweise durch ein Wasserbad auf die Verarbeitungstemperatur zum Verschweißen wie beispielsweise auf 40°C vorgesehen werden. Neben einer geeigneten Verarbeitungstemperatur hängt eine mediendichte Verschweißung von dem Anpressdruck, der Erweichungstemperatur des Hüllmaterials, der Materialdicke und der Verweilzeit unter Schweißbedingungen ab.

Eine bevorzugte Verwendung des Quetschwalzengranulators, wie er oben beschrieben ist, bildet die Herstellung von Granulatkissen mit pulverförmigen, flüssigen, zähviskosen oder plastisch verformbaren Füllmassen. Dabei wird der erfindungsgemäße Quetschwalzengranulator zur Portionierung von pharmazeutischen, medikamentösen, kosmetische, adhäsiven oder steril zu verpackenden Füllmassen in Granulatkissen mit Außenhüllen aus thermoplastisch verformbaren Kunststoffen mit oder ohne Anteilen von Wachsen eingesetzt. Als adhäsive Füllmassen können vorzugsweise Schmelzklebstoffe in Granulatkissen portioniert werden. Als Material für die Außenhüllen wird zum Einhüllen des Schmelzklebstoffs ein Material eingesetzt, das eine äußere Oberfläche des Granulatkissens ausbildet, die nicht adhäsiv ist.

Die Erfindung wird im Folgenden anhand der beispielhaft erläuterten Ausführungsformen näher beschrieben werden.

Figur 1     zeigt eine Prinzipskizze eines Quetschgranulators in einer Granulieranlage zur Herstellung von Granulatkissen;

Figur 2     zeigt einen schematischen Querschnitt durch einen Ausschnitt eines Quetschgranulators;

Figur 3     zeigt eine schematische perspektivische Ansicht einer Quetschwalze des Quetschgranulators;

Figur 4     zeigt eine schematische Kontur eines Zahnkopfbereichs einer Quetschwalze;

Figur 5     zeigt eine schematische Kontur eines Zahnfußbereichs der Quetschwalze gemäß Figur 4;

Figur 6     zeigt eine alternative schematische Kontur eines Zahnkopfbereichs der Quetschwalze;

Figur 7     zeigt eine weitere Modifikation der Kontur des Zahnkopfbereichs der Quetschwalze;

Figur 8     zeigt eine weitere Alternative der Kontur des Zahnkopfbereichs der Quetschwalze;

Figur 9     zeigt mit den Figuren 9a bis 9i Fertigungsphasen in einem Zahnkopfbereich eines Walzenpaares aus einer zylindrischen Andruckwalze und einer Quetschwalze.

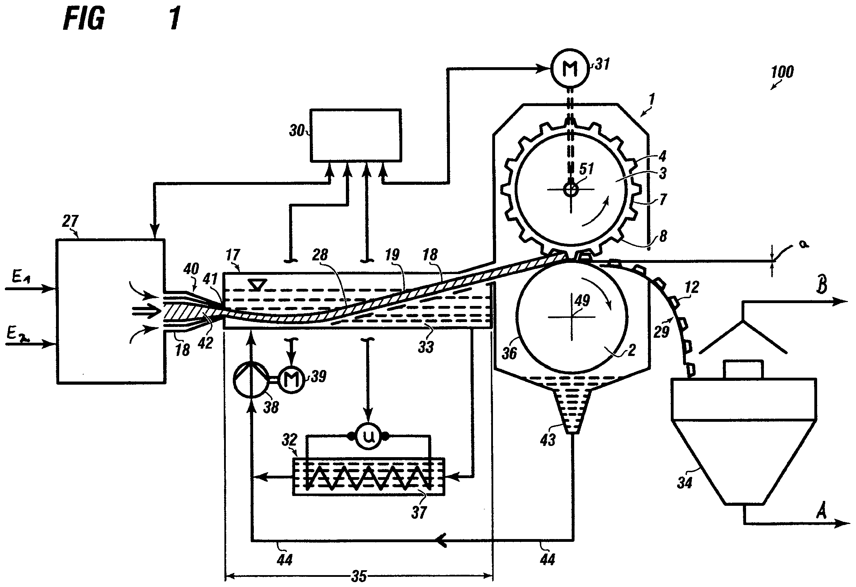

Figur 1 zeigt eine Prinzipskizze eines Quetschgranulators 1 in einer Granulieranlage 100 zur Herstellung von Granulatkissen 12. Die Granulieranlage 100 weist eine Extrusionsvorrichtung 27, eine Zufuhrstrecke 35 und den Quetschgranulator 1 auf. Die Extrusionsvorrichtung 27 coextrudiert eine Füllmasse 19 in einen Hüllschlauchs 18 zu einem Kunststoffstrang 28. Dieser Kunststoffstrang 28 wird in einer Zufuhrvorrichtung 17 auf einer Zufuhrstrecke 35 temperiert und dem Quetschgranulator 1 zugeführt.

Der Quetschgranulator 1 weist im Wesentlichen eine Andruckwalze 2 und eine verzahnte Quetschwalze 3 auf, die von einem Antrieb 31 angetrieben wird. Die Quetschwalze 3 wälzt sich mit ihrer Verzahnung 4 auf einer zylindrischen Oberfläche 36 der Andruckwalze 2 derart ab, dass unter Ausbildung eines minimalen Abstands a in dem aus einem Hüllschlauch 18 mit einer coextrudierten Füllmasse 19 gefüllte Granulatkissen 12 portioniert werden.

Die gefüllten Granulatkissen 12 werden über eine Auffangvorrichtung 29 einer Trockenvorrichtung 34 zugeführt, aus der die getrockneten und befüllten Granulatkissen 12 in Pfeilrichtung A ausgegeben werden und in Pfeilrichtung B die feuchtigkeitshaltige Luft abgeführt wird.

In der Zufuhrvorrichtung 17 ist auf der Zufuhrstrecke 35 eine Temperiervorrichtung 32 angeordnet, die durch ein Wasserbad 33, durch das der Kunststoffstrang 28 geleitet wird, eine Temperierung des Hüllschlauchs 18 ermöglicht. Die Temperatur, die der Hüllschlauch 18 aus einem thermoplastischen Material annehmen soll, dient der Herstellung einer Schweißnaht in einem Spalt zwischen einem Zahnkopfbereich 8 der Quetschwalze 3 und der zylindrischen Oberfläche 36 der Andruckwalze 2. Der Zahnkopfbereich 8 weist eine Mittenquetschzone auf, die einen minimalen Abstand a zu der Andruckwalze 2 ausbildet und derart gestaltet ist, dass sich in der Mittenquetschzone ein Sollbruchnahtprofil zwischen mediendichten Schweißnähten des Hüllschlauchs 18 ausbildet, so dass die sich bildenden Granulatkissen 12 aus einer Außenhülle und einer Füllmasse trennbar sind.

Die Temperiervorrichtung 32 für ein temperierendes Wasserbad 33 weist einen Wärmetauscher 37 auf, der die notwendige Kühl- oder Heizenergie zur Temperierung des Wasserbades 33 liefert, wobei eine Pumpe 38, angetrieben von einem Motor 39, den Kreislauf zwischen dem Wasserbad 33 und dem Wärmetauscher 37 aufrechterhält.

Zur Versorgung der Extrusionsvorrichtung 27 mit dem Material für den Hüllschlauch 18 weist diese einen Eingang $E_1$ auf, während das Füllmaterial über den Eingang $E_2$ der Extrusionsvorrichtung 27 zugeführt wird. Am Ausgang der Extrusionsvorrichtung 27 ist eine Coextrusionsdüse 40 angeordnet, die einen Ringspalt 41 zur Extrusion eines Hüllschlauchs 18 aufweist. Im Zentrum 42 der Coextrusionsdüse 40 kann das Füllmaterial 19 coextrudiert werden. Ein derartiges Füllmaterial kann sowohl pulverförmig als auch flüssig sowie schmelzflüssig der Coextrusionsdüse 40 über den Eingang $E_2$ zugeführt werden. Vorzugsweise wird als Füllmaterial 19 ein Schmelzklebstoff coextrudiert.

Die in Figur 1 gezeigte Granulieranlage 100 weist darüber hinaus eine Steuer- und Regeleinheit 30 auf, die den Antrieb 31 der Quetschwalze 3 mit der Extrusionsgeschwindigkeit der Extrusionsvorrichtung 27 koordiniert und gleichzeitig die Temperierung des Kunststoffstrangs 28 im Bereich der Zufuhrstrecke 35 der Zufuhrvorrichtung 17 regelt.

Das temperierende Wasser kann über nicht gezeigte Zuleitungen auch der Quetschwalze 3 zur Temperierung der Quetschwalze zugeführt werden und über einen Wasserauslass 43 des Quetschgranulators 1 in den Kreislauf des temperierenden Wassers über die Rückleitung 44 zugeführt werden.

Anstelle der hier gezeigten Auffangvorrichtung 29 für die Granulatkissen 12, die von der Auffangvorrichtung 29 der Trockenvorrichtung zugeführt werden, können die Granulatkissen 12 auch in einem Rohrsystem mit einem Wasserstrom zu einem nicht gezeigten Wasserabscheider und anschließend zu der hier gezeigten Trockenvorrichtung 34 geführt werden.

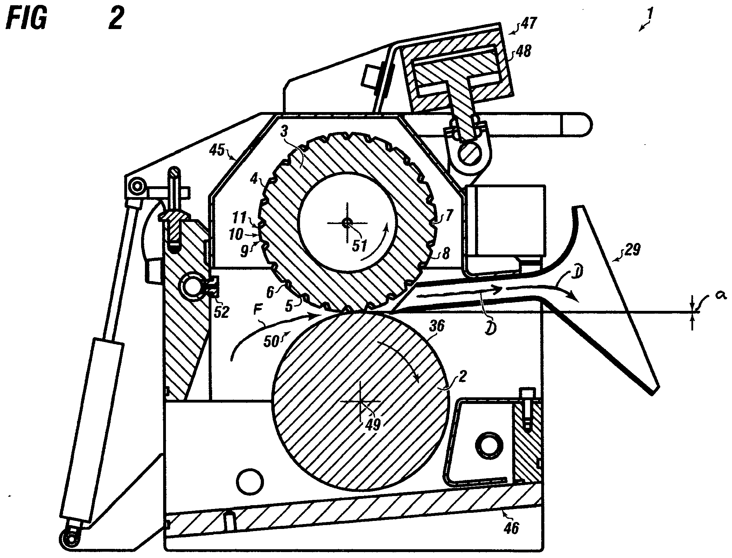

Figur 2 zeigt einen schematischen Querschnitt eines Quetschgranulators 1. Der Quetschgranulator 1 weist zwei Gehäusehälften 45 und 46 auf, wobei eine obere Gehäusehälfte 45 gegenüber einer unteren Gehäusehälfte 46 schwenkbar angeordnet ist. Dabei kann die untere Gehäusehälfte 46 auf einem Maschinengestell angeordnet sein. In der unteren Gehäusehälfte 46 ist drehbar die zylindrische Andruckwalze 2 gelagert, während in der oberen Gehäusehälfte 45 die angetriebene mit einer Verzahnung 4 versehene Quetschwalze 3 angeordnet ist.

Zusätzlich weist die obere Gehäusehälfte 45 einen Andruckmechanismus 47 auf, mit dem im geschlossenen Zustand des Gehäuses die Quetschwalze 3 gegenüber der Andruckwalze 2 unter Änderung eines minimalen Abstands a oder unter Änderung eines Anpressdrucks zwischen der zylindrischen Oberfläche 36 der Andruckwalze 2 und den Zahnkopfbereichen 8 der Quetschwalze 3 mittels eines Hydraulik- oder Pneumatikzylinders 48 variiert werden können. Mit dem Andruckmechanismus 47 können die Quetschbereiche und ihre mögliche Quetschdicke an das jeweilige Material des Hüllschlauchs für eine optimale Herstellung von Dichtnähten sowie von Sollbruchprofilen angepasst werden. Anstelle des gezeigten Hydraulik- oder Pneumatikzylinders 48 kann auch ein elektromechanischer Aktuator eingesetzt werden.

Die Achsen 49 und 51 der Andruckwalze 2 bzw. der Quetschwalze 3 sind achsparallel in den Gehäusehälften 45 und 46 gelagert. Die Quetschwalze 3 weist eine Verzahnung 4 auf, die einen Zahnfußbereich 7 und einen Zahnkopfbereich 8 aufweist. Der Zahnkopfbereich 8 weist drei Quetschzonen 9, 10 und 11 auf, wie es in den weiteren Figuren im Detail gezeigt wird. Die Quetschzonen 9, 10 und 11 weisen eine Eingangsquetschzone 9, eine Mittenquetschzone 10 und eine Ausgangsquetschzone 11 auf. Die Mittenquetschzone 10 ist zwischen der Eingangsquetschzone 9 und der Ausgangsquetschzone 11 angeordnet und definiert den geringsten Abstand a zwischen der Quetschwalze 3 und der Andruckwalze 2 bei feststehendem Andruckmechanismus 47. Dieser geringste Abstand hängt von dem entsprechendem Anpressdruck zwischen der Mittenquetschzone 10 und der zylindrischen Oberfläche der Andruckwalze, der Verarbeitungstemperatur und von den Materialeigenschaften, wie beispielsweise Materialstärke und Plastizität bei der Verarbeitungstemperatur ab.

Weiterhin weist dieser Querschnitt durch den Quetschgranulator 1 einen Auffangtrichter der Auffangvorrichtung 29 auf, der die in Figur 1 gezeigten Granulatkissen in Pfeilrichtung D weiterleitet, wenn in Pfeilrichtung F entsprechende Kunststoffstränge aus einem Hüllschlauch und einer Füllmasse dem Walzenpaar 50 in dem Spaltbereich zugeführt werden. Außerdem ist in der unteren Gehäusehälfte 46 eine Wasserstrahldüse 52 angeordnet, die temperiertes Wasser auf den Quetschspalt richtet, um den Schweißprozess bei der Bildung von Dichtnähten zu unterstützen.

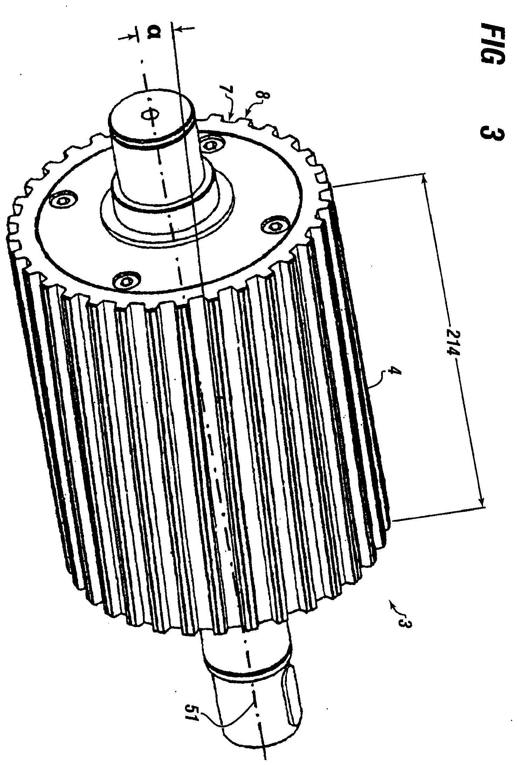

Figur 3 zeigt eine schematische perspektivische Ansicht einer Quetschwalze 3 des Quetschgranulators, wie er in Figur 1 und 2 zu sehen ist. Die Breite B der Quetschwalze 3 ist derart dimensioniert, dass gleichzeitig mehrere Kunststoffstränge parallel zu Granulatkissen verarbeitet werden können. Dabei ist die Verzahnung 4 der Quetschwalze 3 als Schrägverzahnung ausgebildet mit einem sogenannten Spiralwinkel $\alpha$ in Bezug auf die Ausrichtung der Quetschwalzenachse 51.

Dieser Schrägverzahnungswinkel bzw. Spiralwinkel $\alpha$ ist derart dimensioniert, dass mindestens ein Zahnkopfbereich 8 von einem der n Zahnkopfbereiche 8 der Quetschwalze 3 mit der in Figur 2 gezeigten zylindrischen Oberfläche 36 der Andruckwalze 2 auf der Breite B der Quetschwalze 3 abwälzen kann. Daraus ergibt sich ein Schrägverzahnungswinkel bzw. Spiralwinkel $\alpha$ zwischen:

$$\arctan \Pi D/nB \leq \alpha \leq 5 \arctan \Pi D/nB,$$

mit D Außendurchmesser der Quetschwalze 3, B Breite der Quetschwalze 3 sowie n Anzahl der auf dem Außenumfang verteilten Verzahnungen 4 der Quetschwalze 3.

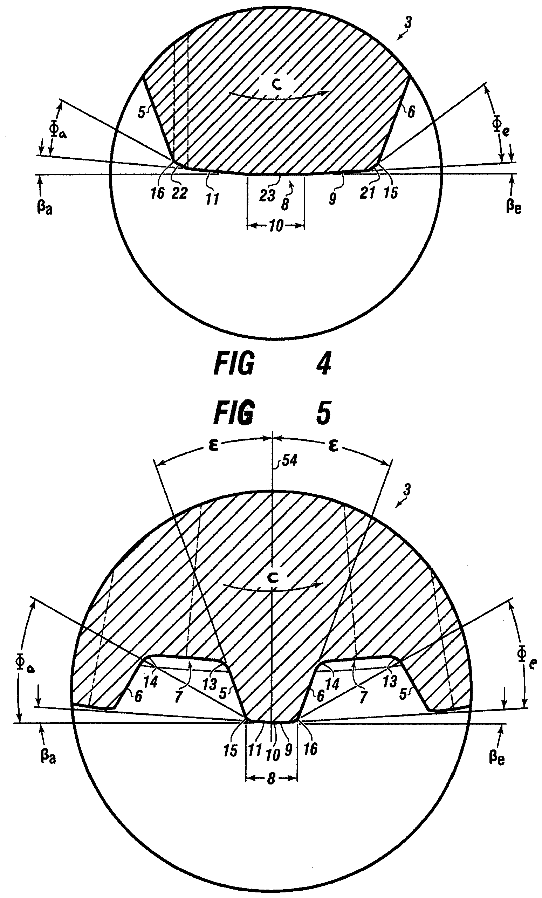

Figur 4 zeigt eine schematische Kontur eines Zahnkopfes 8 einer Quetschwalze 3, wobei die Pfeilrichtung C die Drehrichtung der Quetschwalze 3 beschreibt. Der Zahnkopfbereich 8 liegt zwischen einer in Drehrichtung C ansteigenden Zahnflanke 6 und einer in Drehrichtung abfallenden Zahnflanke 5 der Verzahnung 4 der Quetschwalze 3. Die Eingangsquetschzone 9 beginnt mit einem Ende 15 der ansteigenden Zahnflanke 6, die an dem Ende 15 eine gefaste Eingangskante 21 mit einem Fasenwinkel $\varphi_e$ aufweist. Der Fasenwinkel $\varphi_e$ kann zwischen 45° und 15° liegen. Die Ausgangsquetschzone 11 endet an einem Anfang 16 einer abfallenden Zahnflanke 5, wobei der Anfang 16 eine gefaste Ausgangskante 22 mit einem Fasenwinkel $\varphi_a$ zwischen 45° und 15° aufweist, wobei $\varphi_e$ und $\varphi_a$ ungleiche Beträge aufweisen können.

Die gefasten Eingangskanten 21 und Ausgangskanten 22 sorgen für eine schonende Quetschverschweißung des Hüllschlauchs beim Portionieren desselben. Zwischen der Eingangsquetschzone 9 und der Ausgangsquetschzone 11 liegt eine Mittenquetschzone 10, die mit Ihrer Abflachung 23 in dem gesamten Bereich der Mittenquetschzone 10 einen gleichbleibenden geringsten Abstand zur Andruckwalze definiert. Die Eingangsquetschzone 9 ist von der Eingangskante 21 zu der Mittenquetschzone 10 derart ausgebildet, dass sich der Abstand zu der Andruckwalze graduell vermindert. Dieses wird dadurch erreicht, dass in dieser Ausführungsform der Erfindung der Anstiegswinkel $\beta_e$ von der Eingangskante 21 bis zur Mittenquetschzone 10 für die Eingangsquetschzone 9 zwischen 2° und 8° vorzugsweise zwischen 3° und 5° liegt. In analoger Weise vergrößert sich von der Mittenquetschzone 10 ausgehend der Abstand zu der Andruckwalze in der Ausgangsquetschzone 11, für die in dieser Ausführungsform der gleiche Betrag für den Abfallwinkel $\beta_a$ mit $\beta_a = \beta_e$ erfindungsgemäß vorgesehen ist.

Die Mittenquetschzone 10 mit ihrem minimalen Abstand a zu der Andruckwalze bildet beim Portionieren des Hüllschlauchs mit coextrudierter Füllmasse ein füllmassenfreies Sollbruchprofil aus, das je nach Einstellung des Andruckmechanismus 47, der in Figur 2 gezeigt wird, Bruchteile von Millimetern oder wenige Millimeter betragen kann.

Figur 5 zeigt eine schematische Kontur der Verzahnung 4 der Quetschwalze 3 im Bereich von Zahnfußbereichen 7. Ein derartiger Zahnfußbereich 7 reicht bei einer Drehrichtung in Pfeilrichtung C von dem Ende 13 einer abfallenden Zahnflanke 5 bis zu dem Anfang 14 einer ansteigenden Zahnflanke 6. Der Zahnfußbereich 7 kann mehrere Millimeter bis zu wenigen Zentimetern aufweisen und liegt zwischen einer abfallenden und einer ansteigenden Zahnflanke 5 bzw. 6. Außerdem kann ein Radius von 1 mm bis 3 mm im Bereich des Endes 13 der abfallenden Zahnflanke 5 sowie im Bereich des Anfangs 14 der ansteigenden Zahnflanke 6 vorgesehen werden, um Mikrorisse durch Kerbwirkung der Übergänge zwischen den Zahnflanken 5 und 6 zum Zahnfußbereich 7 zu vermeiden.

Die Zahnflanken bilden zur Mittellinie 54 des Zahnkopfbereichs 8 einen Flankenwinkel $\varepsilon$ aus, der zwischen 10° und 35°, vorzugsweise zwischen 15° und 25° liegen kann. Die Kontur des Zahnfußbereichs 7 mit der Kontur der ansteigenden bzw. abfallenden Zahnflanken 5 bzw. 6 in Zusammenwirken mit der zylindrischen Oberfläche der Andruckwalze bilden den maximal möglichen Querschnitt eines durch den Quetschgranulator herstellbaren Granulatkissens aus einer Außenhülle, die von einem Füllmaterial aufgefüllt ist.

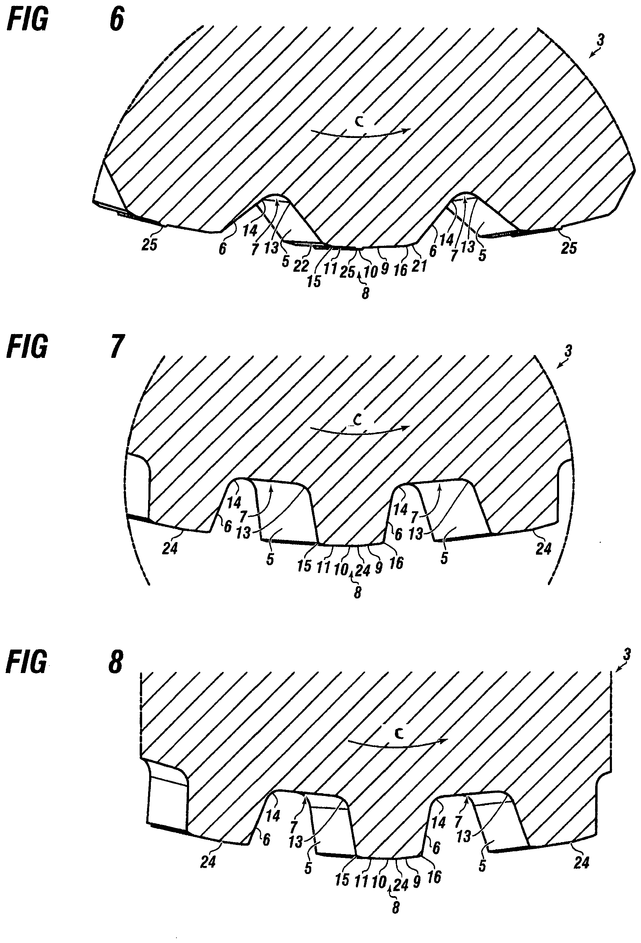

Die in dieser Ausführungsform der Figuren 4 und 5 gezeigte gleich bleibend von der Andruckwalze beabstandete Mittenquetschzone 10 wird nun in den weiteren Ausführungsformen der Erfindung, die in den Figuren 6 bis 8 gezeigt werden, variiert.

Figur 6 zeigt eine alternative schematische Kontur eines Zahnkopfbereichs 8 der Quetschwalze 3. Komponenten mit gleichen Funktionen wie in den Figuren 4 und 5 werden mit gleichen Bezugzeichen gekennzeichnet und nicht extra erörtert.

Der Unterschied zu der Ausführungsform gemäß den Figuren 4 und 5 besteht darin, dass in Figur 6 die Mittenquetschzone einen Stegquerschnitt 25 aufweist, der über das Niveau der Eingangsquetschzone 9 und der Ausgangsquetschzone 11 hinausragt und damit einen minimalen Abstand zu der zylindrischen Oberfläche der Andruckwalze definiert. Dieser Stegquerschnitt 25 der Mittenquetschzone kann wie bisher ein Sollbruchnahtprofil in den Hüllschlauch einquetschen oder sogar derart ausgebildet sein, dass er eine Trennschneide bildet, welche die Granulatkissen voneinander trennt.

Figur 7 zeigt eine weitere Modifikation der Kontur des Zahnkopfbereichs 8 der Quetschwalze 3. Während sowohl eine geringfügig modifizierte Eingangsquetschzone 9 und Ausgangsquetschzone 11 vorgesehen sind, ist in der Mittenquetschzone 10 des Zahnkopfbereichs 8 eine scharfe Stufe 24 beim Übergang von der Eingangsquetschzone 9 zu der Mittenquetschzone 10 angeordnet. Mit dieser scharfen Stufe 24 kann ebenfalls ein hochwirksames Sollbruchnahtprofil bis hin zum Abscheren der Granulatkissen erreicht werden. Bei dieser Ausführungsform kann die Ausgangsquetschzone 11 gegenüber der Eingangsquetschzone 9 verlängert sein.

Figur 8 zeigt eine weitere Alternative der Kontur des Zahnkopfbereichs 8 der Quetschwalze 3, bei der ähnlich wie in Figur 7 eine scharfe Stufe 24 in der Mittenquetschzone 10 vorgesehen ist, jedoch mit dem Unterschied zu der in Figur 7 gezeigten Ausführungsform, dass diese Stufe 24 am Übergang der Mittenquetschzone 10 zu der Ausgangsquetschzone 11 angeordnet ist. Bei dieser Ausführungsform kann die Eingangsquetschzone 9 gegenüber der Ausgangsquetschzone 11 verlängert sein.

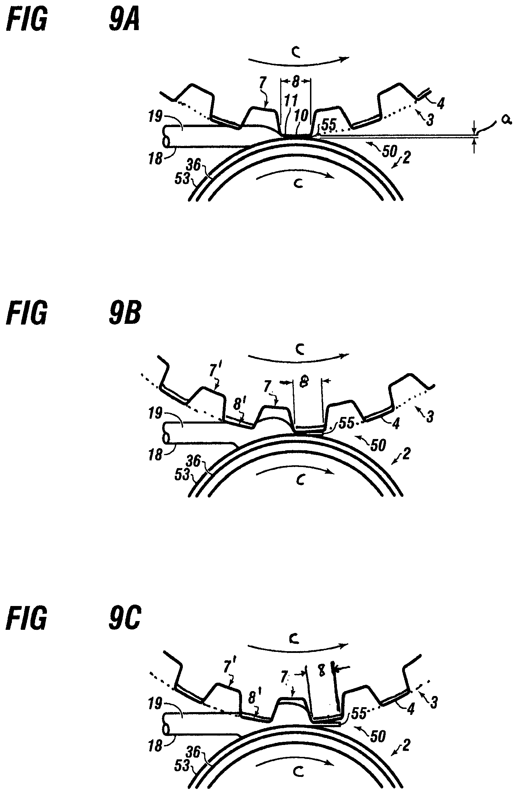

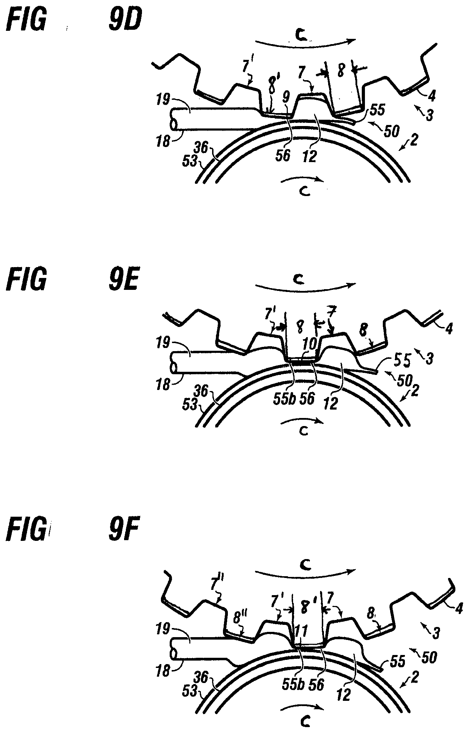

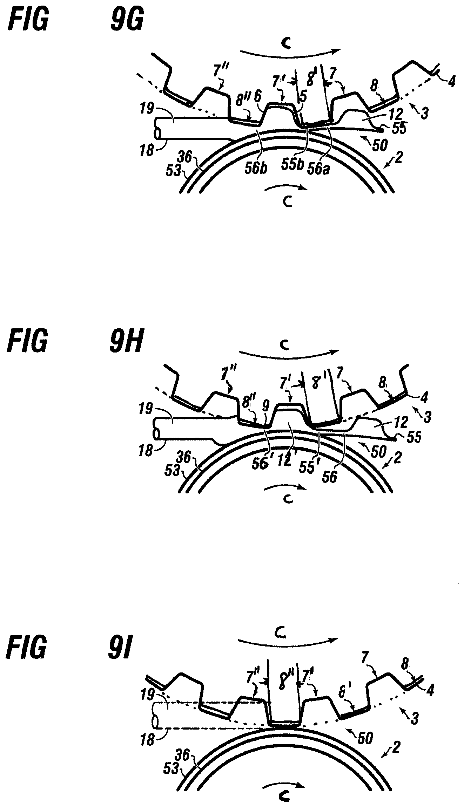

Figur 9 zeigt mit den Figuren 9a bis 9i Fertigungsphasen in einem Zahnkopfbereich 8 eines Walzenpaares 50 aus einer Andruckwalze 2 und einer Quetschwalze 3. Die Andruckwalze 2 weist eine zylindrische Oberfläche 36 auf, die eine gehärtete Metalllegierung oder eine Hartmetallbeschichtung oder Keramikbeschichtung 53 aufweist. Die Zahnkopfbereiche 8, 8' und 8" der Quetschwalze 3 sind vorzugsweise durch ein induktives Härteverfahren oberflächengehärtet.

Über den Spalt, der einen minimalen Abstand a zwischen der Andruckwalze 2 und der Quetschwalze 3 ausbildet, wird wie Figur 9a zeigt, der Anfang eines Hüllschlauchs 18 mit einer Füllmasse 19 unter Ausbildung einer ersten mediendichten Anfangsquetschnaht 55 eines zu bildenden Granulatkissens eingezogen. Dabei wird der Hüllschlauch 18 mit der Füllmasse 19 in Figur 9b von einem nachfolgenden Zahnkopfbereich 8' der Verzahnung 4 der Quetschwalze 3 erfasst.

Wie Figur 9c zeigt, wird der Hüllschlauch 18 zunehmend zusammengepresst und dabei die Füllmasse 19 in den Hohlraum zwischen der zylindrischen Oberfläche 36 der Andruckwalze 2 und dem Zahnfußbereich 7 der Quetschwalze 3 unter Ausbildung einer die Füllmasse 19 umgebenden Außenhülle gepresst. In der Figur 9d wird schließlich die Eingangsquetschzone 9 des nachfolgenden Zahnkopfbereichs 8' erreicht und eine erste Endquetschnaht 56 in der Eingangsquetschzone 9 für ein erstes Granulatkissen 12 ausgebildet.

Mit der Figur 9e wird der minimale Abstand a wie ihn die Figur 9a zeigt zwischen dem nachfolgenden Zahnkopfbereich 8' und der zylindrischen Oberfläche 36 der Andruckwalze 2 durch die Mittenquetschzone 10 des Zahnkopfbereichs 8' erreicht und damit ein Sollbruchnahtprofil ausgebildet. Beim Weiterdrehen der Quetschwalze 3 in Pfeilrichtung C wandert der Zahnkopfbereich 8' in die Ausgangsquetschzone 11, welche nun in Figur 9f eine mediendichte zweite Anfangsquetschnaht 55' durch Verschweißen für ein nachfolgendes Granulatkissen 12' ausbildet.

Beim Weiterdrehen der Quetschwalze 3 in Pfeilrichtung C wird die in Figur 9g gezeigte Phase erreicht, bei der nun die Kontur des Granulatkissens 12' zwischen der zylindrischen Oberfläche 36 der Andruckwalze 2 und der Kontur, gebildet aus den Zahnflanken 5 und 6 und dem Zahnfußbereich 7' der Quetschwalze 3 vorbereitet wird, die nahezu den gesamten Zwischenraum zwischen der zylindrischen Oberfläche der Andruckwalze 2 und dem Zahnfußbereich 7 der Quetschwalze 3 auffüllt.

Wie Figur 9h zeigt, wird, sobald die Eingangsquetschzone 9 des Zahnkopfbereichs 8" der Quetschwalze 3 den Abstand zwischen der zylindrischen Oberfläche 36 der Andruckwalze 2 und dem Zahnkopfbereich 8" der Quetschwalze 3 auf einen Schweißabstand vermindert, eine weitere Endquetschnaht 56' des nächstfolgenden Granulatkissens 12' verschweißt.

Schließlich wird in Figur 9i der Ausgangszustand, wie ihn Figur 9a zeigt, mit einem nachfolgenden Zahnkopfbereich 8" erreicht. Somit können nun fortlaufend synchron zur Drehgeschwindigkeit der Quetschwalze 3 und der Extrusionsgeschwindigkeit des Kunststoffstrangs Granulatkissen 12 aus einem Hüllmaterial und einer Füllmasse in großen Mengen portioniert und auch steril produziert werden, ohne dass Mikroorganismen eingeschleust werden.

Da die Breite der Granulatkissen 12 geringer ist als die Breite B der Quetschwalze 3 wie es Figur 3 zeigt, können parallel mehrere Hüllschläuche 18, nämlich bis zu N Hüllschläuchen mit $N \leq 2B/\Pi d$ gleichzeitig nebeneinander bzw. parallel auf der Quetschwalze 3 angeordnet werden, wobei d der Außendurchmesser des Hüllschlauchs ist. Damit kann der Ausstoß des erfindungsgemäßen Quetschgranulators deutlich vervielfacht werden.

**Bezugszeichenliste**

| | |
|---|---|
| 1 | Quetschgranulator |
| 2 | Andruckwalze |
| 3 | verzahnte Quetschwalze |
| 4 | Verzahnung |
| 5 | Zahnflanke (abfallend) |
| 6 | Zahnflanke (ansteigend) |
| 7, 7', 7" | Zahnfußbereich |
| 8, 8', 8" | Zahnkopfbereich |
| 9 | Eingangsquetschzone |
| 10 | Mittenquetschzone |
| 11 | Ausgangsquetschzone |
| 12 | Granulatkissen |
| 13 | Ende einer abfallenden Zahnflanke |
| 14 | Anfang einer ansteigenden Zahnflanke |
| 15 | Ende einer ansteigenden Zahnflanke |
| 16 | Anfang einer abfallenden Zahnflanke |
| 17 | Zufuhrvorrichtung |
| 18 | Hüllschlauch |
| 19 | Füllmasse |
| 21 | Eingangskante mit Fase |
| 22 | Ausgangskante mit Fase |
| 23 | Abflachung |
| 24 | Stufe |
| 25 | Stegquerschnitt |
| 26 | Schrägverzahnung |
| 27 | Extrusionsvorrichtung |
| 28 | Kunststoffstrang |
| 29 | Auffangvorrichtung |
| 30 | Steuer- und Regeleinheit |
| 31 | Antrieb der Quetschwalze |
| 32 | Tempeniervorrichtung |
| 33 | Wasserbad |
| 34 | Trockenvorrichtung |
| 35 | Zufuhrstrecke |
| 36 | zylindrische Oberfläche |
| 37 | Wärmetauscher |
| 38 | Pumpe |
| 39 | Motor |
| 40 | Coextrusionsdüse |
| 41 | Ringspalt der Coextrusionsdüse |
| 42 | Zentrum der Coextrusionsdüse |
| 43 | Wasserauslass |
| 44 | Rückleitung |
| 45 | obere Gehäusehälfte |
| 46 | untere Gehäusehälfte |

| 47 | Andruckmechanismus |
| 48 | Hydraulik- oder Pneumatikzylinder |
| 49 | Achse der Andruckwalze |
| 50 | Walzenpaar |
| 51 | Achse der Quetschwalze |
| 52 | Wasserstrahldüse |
| 53 | Keramikbeschichtung |
| 54 | Mittellinie |
| 55, 55' | Anfangsquetschnaht eines Granulatkissens |
| 56, 56' | Endquetschnaht eines Granulatkissens |
| 100 | Granulieranlage |

| $\alpha$ | Spiralwinkel bzw. Schrägverzahnungswinkel |
| $\beta$ | Anstiegswinkel |
| $\varphi$ | Fasenwinkel |
| $\varepsilon$ | Flankenwinkel |
| a | minimaler Abstand zu Andruckwalze |
| B | Breite der Quetschwalze |
| d | Außendurchmesser des Zahnfußbereichs |
| D | Außendurchmesser des Zahnkopfbereichs der Quetschwalze |
| l | Länge des Granulatkissens |
| n | Anzahl der Verzahnungen der Quetschwalze |
| N | Anzahl der Hüllschläuche |

**Patentansprüche**

1. Quetschwalzengranulator der eine zylindrische Andruckwalze (2) und eine verzahnte Quetschwalze (3) aufweist, wobei die Verzahnung (4) der Quetschwalze (3) Zahnflanken (5, 6) aufweist, die zwischen einem Zahnfußbereich (7) und einem Zahnkopfbereich (8) angeordnet sind, und wobei der Zahnfußbereich (7) einen Außendurchmesser (d) aufweist, der geringer ist als der Außendurchmesser (D) des Zahnkopfbereichs (8), wobei der Zahnkopfbereich (8) der Quetschwalze (3) drei Quetschzonen (9, 10, 11) mit einer Mittenquetschzone (10) aufweist, die unterschiedliche Abstände zu der zylindrischen Andruckwalze (2) definieren mit einem minimalen Abstand (a) im Bereich der Mittenquetschzone (10), und wobei die Kontur der Zahnflanken (5, 6) und des Zahnfußbereichs (7) der Quetschwalze (3) in Zusammenwirken mit der Kontur der zylindrischen Andruckwalze (2) einen maximalen Querschnitt eines jeweils zu formenden Granulatkissens (12) definiert, **dadurch gekennzeichnet, dass** sich der Zahnfußbereich (7) von einem Ende (13) einer abfallenden Zahnflanke (5) zu einem Anfang (14) einer ansteigenden Zahnflanke (6) erstreckt und der Zahnkopfbereich (8) von einem Ende (15) einer ansteigenden Zahnflanke (6) zu einem Anfang (16) einer abfallenden Zahnflanke (5) erstreckt, und wobei die Quetschzonen (9, 10, 11) des Zahnkopfbereichs (8) eine Eingangsquetschzone (9), die in Zufuhrrichtung angeordnet ist, eine Ausgangsquetschzone (11), die in einer Abfuhrrichtung angeordnet ist und die Mittenquetschzone (10), die zwischen Eingangs- und Ausgangsquetschzone (9, 11) angeordnet ist aufweisen, und wobei die Eingangs- und Ausgangsquetschzonen (9, 11) der Verzahnung (4) von den Zahnflanken (6, 7) begrenzt sind, und wobei die Eingangsquetschzone (9) einen zu der Mittenquetschzone (10) hin vermindernden Abstand und die Ausgangsquetschzone (11) einen sich von der Mittenquetschzone (10) aus vergrößernden Abstand zur Andruckwalze (2) definiert, mit einem Anstiegswinkel $\beta_e$ für die Eingangsquetschzone (9) zwischen 2° und 8° und einem Abfallwinkel $\beta_a$ für die Ausgangsquetschzone (11) zwischen 2° und 8°, wobei der Anstiegswinkel $\beta_e$ den gleichen Betrag wie der Abfallwinkel $\beta_a$ aufweist.

2. Quetschwalzengranulator nach Anspruch 1, **dadurch gekennzeichnet, dass** der Quetschwalzengranulator (1) eine Zufuhrvorrichtung (17), zum Zuführen eines Hüllschlauchs (18) mit coextrudierter Füllmasse (19) aufweist, und wobei die jeweils zu formenden Granulatkissen (12) Portionen der Füllmasse (19) aufweisen, die von einer Außenhülle aus dem Material des Hüllschlauchs (18) umhüllt sind.

3. Quetschwalzengranulator nach Anspruch 1 oder Anspruch 2, **dadurch gekennzeichnet, dass** die Eingangsquetschzone (9) zur Ausbildung einer Eingangsdichtnaht und die Ausgangsquetschzone (11) zur Ausbildung einer Ausgangsdichtnaht der jeweils zu formenden Granulatkissen (12) und die Mittenquetschzone (10) zur Ausbildung eines Sollbruchnahtprofils zwischen den jeweils zu formenden Granulatkissen (12) ausgebildet sind.

4. Quetschwalzengranulator nach einem der vorhergehenden Ansprüche, **dadurch gekennzeichnet, dass** der Zahnkopfbereich (8) eine gefaste Eingangskante (21) zu der Eingangsquetschzone (9) und eine gefaste Ausgangskante (22) der Ausgangsquetschzone (11) aufweist.

5. Quetschwalzengranulator nach einem der vorhergehenden Ansprüche, **dadurch gekennzeichnet, dass** die Mittenquetschzone (10) des Zahnkopfbereichs (8) der Quetschwalze (3) als Sollbruchnahtprofil eine Abflachung (23) aufweist.

6. Quetschwalzengranulator nach einem der Ansprüche 1 bis 4, **dadurch gekennzeichnet, dass** die Mittenquetschzone (10) des Zahnkopfbereichs (8) der Quetschwalze (3) als Sollbruchnahtprofil eine Stufe (24) aufweist.

7. Quetschwalzengranulator nach einem der Ansprüche 1 bis 4, **dadurch gekennzeichnet, dass** die Mittenquetschzone (10) des Zahnkopfbereichs (8) der Quetschwalze (3) einen über die Eingangsquetschzone (9) und die Ausgangsquetschzone (11) herausragenden Stegquerschnitt (25) aufweist.

8. Quetschwalzengranulator nach einem der vorhergehenden Ansprüche, **dadurch gekennzeichnet, dass** die Ausgangsquetschzone (11) länger ist als die Eingangsquetschzone (9).

9. Quetschwalzengranulator nach einem der vorhergehenden Ansprüche, **dadurch gekennzeichnet, dass** die Quetschwalze (3) und die Andruckwalze (2) eine Metalllegierung aufweisen, und wobei die zylindrische Oberfläche der Andruckwalze (2) und die Zahnkopfbereiche (8) der Quetschwalze (3) verschleißfeste Oberflächen, vorzugsweise gehärtete Oberflächen oder Oberflächen von Hartmetallbeschichtungen oder Keramikbeschichtungen aufweisen.

10. Quetschwalzengranulator nach einem der Ansprüche 2 bis 9, **dadurch gekennzeichnet, dass** der Hüllschlauch (18) thermoplastische Kunststoffe der Gruppe Polyamid (PA), Polypropylen (PP), Low Density Polyethylen (LDPE), Copolymer (COP) oder Ethylen-Vinylalkohol-Copolymer (EVOH), Ethylen-Vinyl-Acetat Copolymer (EVA) und Mischprodukte derselben mit Anteilen von Polyolefinwachsen, Polyethylenwachsen, Polypropylenwachsen oder Fettsäurederivaten aufweist.

11. Quetschwalzengranulator nach einem der vorhergehenden Ansprüche, **dadurch gekennzeichnet, dass**
die Quetschwalze (3) eine Schrägverzahnung (26) mit einem Schrägverzahnungswinkel $\alpha$ zwischen

$$\arctan \pi D/nB \le \alpha \le 5 \arctan \pi D/nB$$

mit D Außendurchmesser der Quetschwalze (3), B Breite der Quetschwalze (3) sowie n Anzahl der auf dem Außenumfang verteilten Verzahnungen (4) der Quetschwalze (3), aufweist.

12. Quetschwalzengranulator nach einem der vorhergehenden Ansprüche, **dadurch gekennzeichnet, dass** ein Granulatkissen (12) eine Länge l von

$$l \le \pi D/n$$

mit n Anzahl der auf dem Außenumfang verteilten Verzahnungen (4) der Quetschwalze (3) und D Außendurchmesser der Quetschwalze (3), sowie eine Breite b von

$$b \le B/N$$

mit B Breite der Quetschwalze (3) und N Anzahl von parallel der Quetschwalze (3) zugeführten Hüllschläuchen (18) mit coextrudierter Füllmasse (19), aufweist, wobei

$$N \le 2B/\pi d$$

mit d Außendurchmesser des Hüllschlauchs (18) ist.

13. Granulieranlage mit einem Quetschwalzengranulator nach einem der Ansprüche 1 bis 12, **dadurch gekennzeichnet, dass** die Granulieranlage (100) eine Extrusionsvorrichtung (27) zum Coextrudieren von Füllmassen (19) in Hüllschläuche (18) zu Kunststoffsträngen (28), die Zufuhrvorrichtung (17) zum Zuführen der Kunststoffstränge (28) zu einem Walzenpaar aus der zylindrischen Andruckwalze (2) und der verzahnten Quetschwalze (3), einem Antrieb der Quetschwalze (3) und eine Auffangvorrichtung (29) zur Aufnahme der von dem Walzenpaar zu Granulatkissen (12) portionierten Kunststoffstränge (28) aus einer Außenhülle und einer coextrudierten Füllmasse (19) aufweist, wobei eine Steuer- und Regelvorrichtung des Quetschwalzengranulators (1) den Antrieb der Quetschwalze (3) mit der Extrusionsgeschwindigkeit der Kunststoffstränge (28) koordiniert.

14. Verwendung des Quetschwalzengranulators (1) nach einem der vorhergehenden Ansprüche zur Herstellung von Granulatkissen (12) mit pulverförmiger, flüssiger, zähviskoser oder plastisch verformbarer Füllmasse (19).

15. Verwendung des Quetschwalzengranulators (1) nach einem der Ansprüche 1 bis 13 zur Portionierung von pharmazeutischen, medikamentösen, kosmetischen, adhäsiven oder steril verpackten Füllmassen (19) in Granulatkissen (12) mit Außenhülle.

**Claims**

1. Squeezing-roll granulator that has a cylindrical pressure roller (2) and a toothed squeeze roller (3), wherein the toothing (4) of the squeeze roller (3) has tooth flanks (5, 6) that are located between a tooth base region (7) and a tooth tip region (8), and wherein the tooth base region (7) has an outside diameter (d) that is smaller than the outside diameter (D) of the tooth tip region (8), wherein the tooth tip region (8) of the squeeze roller (3) has three squeezing zones (9, 10, 11) with a middle squeezing zone (10) that define different distances from the cylindrical pressure roller (2) with a minimum distance (a) in the region of the middle squeezing zone (10), and wherein the contour of the tooth flanks (5, 6) and of the tooth base region (7) of the squeeze roller (3) defines, in interaction with the contour of the cylindrical pressure roller (2), a maximum cross-section of an applicable granulate cushion (12) to be formed, **characterized in that**
the tooth base region (7) extends from an end (13) of a falling tooth flank (5) to a beginning (14) of a rising tooth flank (6), and the tooth tip region (8) extends from an end (15) of a rising tooth flank (6) to a beginning (16) of a falling tooth flank (5), and wherein the squeezing zones (9, 10, 11) of the tooth tip region (8) have an incoming squeezing zone (9) that is located in an infeed direction, an outgoing squeezing zone (11) that is located in an outfeed direction, and the middle squeezing zone (10) that is located between the incoming and outgoing squeezing zones (9, 11), and wherein the incoming and outgoing squeezing zones (9, 11) of the toothing (4) are delimited by the tooth flanks (6, 7), and wherein the incoming squeezing zone (9) defines a distance from the pressure roller (2) that decreases toward the middle squeezing zone (10), and the outgoing squeezing zone (11) defines a distance from the pressure roller that increases starting from the middle squeezing zone (10), with an angle of rise $\beta_e$ for the incoming squeezing zone (9) between 2° and 8° and an angle of fall $\beta_a$ for the outgoing squeezing zone (11) between 2° and 8°, wherein the angle of rise $\beta_e$ has the same value as the angle of fall $\beta_a$.

2. Squeezing-roll granulator according to claim 1, **characterized in that** the squeezing-roll granulator (1) has a feed device (17) for feeding a covering tube (18) with coextruded filler (19), and wherein the applicable granulate cushions (12) to be formed have portions of the filler (19) that are encapsulated in an outer cover made of the material of the covering tube (18).

3. Squeezing-roll granulator according to claim 1 or claim 2, **characterized in that** the incoming squeezing zone (9) is designed to form an incoming sealing seam and the outgoing squeezing zone (11) is designed to form an outgoing sealing seam of the applicable granulate cushion (12) to be formed, and the middle squeezing zone (10) is designed to form a tear seam profile between the applicable granulate cushions (12) to be formed.

4. Squeezing-roll granulator according to one of the preceding claims, **characterized in that** the tooth tip region (8) has a beveled incoming edge (21) of the incoming squeezing zone (9) and a beveled outgoing edge (2) of the outgoing squeezing zone (11).

5. Squeezing-roll granulator according to one of the preceding claims, **characterized in that** the middle squeezing zone (10) of the tooth tip region (8) of the squeeze roller (3) has a flat (23) as the tear seam profile.

6. Squeezing-roll granulator according to one of claims 1 to 4, **characterized in that** the middle squeezing zone (10) of the tooth tip region (8) of the squeeze roller (3) has a step (24) as the tear seam profile.

7. Squeezing-roll granulator according to one of claims 1 to 4, **characterized in that** the middle squeezing zone (10) of the tooth tip region (8) of the squeeze roller (3) has a fin cross-section (25) projecting over the incoming squeezing zone (9) and the outgoing squeezing zone (11).

8. Squeezing-roll granulator according to one of the preceding claims, **characterized in that** the outgoing squeezing zone (11) is longer than the incoming squeezing zone (9).

9. Squeezing-roll granulator according to one of the preceding claims, **characterized in that** the squeeze roller (3) and the pressure roller (2) have a metal alloy, and wherein the cylindrical surface of the pressure roller (2) and the tooth tip regions (8) of the squeeze roller (3) have wear-resistant surfaces, preferably hardened surfaces or surfaces of hard metal coatings or ceramic coatings.

10. Squeezing-roll granulator according to one of claims 2 to 9, **characterized in that** the covering tube (18) has thermoplastic plastics from the group consisting of polyamide (PA), polypropylene (PP), low-density polyethylene (LDPE), copolymer (COP) or ethylene vinyl alcohol copolymer (EVOH), ethylene vinyl acetate copolymer (EVA), and mixed products of the same with components of polyolefin waxes, polyethylene waxes, polypropylene waxes, or fatty acid derivatives.

11. Squeezing-roll granulator according to one of the preceding claims, **characterized in that** the squeeze roller (3) has helical toothing (26) with a helical tooth angle $\alpha$ between

$$\arctan \pi D/nB \leq \alpha \leq 5 \arctan \pi D/nB$$

where D is the outside diameter of the squeeze roller (3), B is the width of the squeeze roller (3), and n is the number of teeth (4) of the squeeze roller (3) distributed over the outer circumference.

12. Squeezing-roll granulator according to one of the preceding claims, **characterized in that** a granulate cushion (12) has a length 1 of

$$l \le \pi D/n$$

where n is the number of teeth (4) of the squeeze roller (3) distributed over the outer circumference, and D is the outside diameter of the squeeze roller (3), and has a width b of

$$b \le B/N$$

where B is the width of the squeeze roller (3), and N is the number of covering tubes (18) fed in parallel to the squeeze roller (3) with coextruded filler (19), wherein

$$N \le 2B/\pi d$$

where d is the outside diameter of the covering tube (18).

13. Granulating system with a squeezing-roll granulator according to one of claims 1 to 12, **characterized in that** the granulating system (100) has an extrusion device (27) for coextruding fillers (19) in covering tubes (18) into plastic strands (28), the feed device (17) for feeding the plastic strands (28) to a roller pair consisting of the cylindrical pressure roller (2) and the toothed squeeze roller (3), a drive of the squeeze roller (3), and a receiving device (29) for receiving the plastic strands (28) consisting of an outer cover and a coextruded filler (19) that have been portioned into granulate cushions (12) by the roller pair, wherein a control and regulating device of the squeezing-roll granulator (1) coordinates the drive of the squeeze roller (3) with the extrusion speed of the plastic strands (28).

14. Use of the squeezing-roll granulator (1) according to one of the preceding claims for producing granulate cushions (12) having powdered, liquid, highly viscous, or plastically deformable filler (19).

15. Use of the squeezing-roll granulator (1) according to one of claims 1 to 13 for portioning pharmaceutical, medicinal, cosmetic, adhesive, or sterile-packed fillers (19) into granulate cushions (12) with an outer cover.

**Revendications**

1. Granulateur à cylindre broyeur comportant un cylindre compresseur cylindrique (2) et un cylindre broyeur denté (3), les dents (4) du cylindre broyeur (3) présentant des flancs de dents (5,6) agencés entre une zone de pied de dent (7) et une zone de tête de dent (8), la zone de pied de dent (7) présentant un diamètre extérieur (d) qui est inférieur au diamètre extérieur (D) de la zone de tête de dent (8), la zone de tête de dent (8) du cylindre broyeur (3) comportant trois zones de broyage (9, 10, 11) avec une zone de broyage centrale (10) qui définissent des écarts différents par rapport au cylindre compresseur (2) avec un écart minimal (a) dans la zone de broyage centrale (10), les contours des flancs de dents (5, 6) et de la zone de pied de dent (7) du cylindre broyeur (3) définissant, en interagissant avec les contours du cylindre compresseur (2), une section maximale d'un coussin de granulé (12) respectif à former **caractérisé en ce que**
la zone de pied de dent (7) s'étend d'une extrémité (13) d'un flanc de dent descendant (5) jusqu'au départ (14) d'un flanc de dent ascendant (6), et la zone de tête de dent (8) s'étend d'une extrémité (15) d'un flanc de dent ascendant (6) au départ (16) d'un flanc de dent descendant (5), les zones de broyage (9,10,11) de la zone de tête de dent (8) comportant une zone de broyage d'entrée (9) agencée dans le sens de l'alimentation, une zone de broyage de sortie (11), agencée dans le sens de l'évacuation et la zone de broyage centrale (10), agencée entre la zone de broyage d'entrée et de sortie (9, 11), les zones de broyage d'entrée et de sortie (9, 11) des dents (4) étant délimitées par les flancs de dents (6, 7), et la zone de broyage d'entrée (9) définissant un écart allant en diminuant par rapport à la zone de broyage centrale (10) et la zone de broyage de sortie (11) définissant un écart croissant par rapport au cylindre compresseur (2) en partant de la zone de broyage centrale (10) avec un angle ascendant $\beta_e$ pour la zone de broyage d'entrée (9) compris entre 2° et 8° et un angle descendant $\beta_a$ pour la zone de broyage de sortie (11) compris entre 2° et 8°, l'angle ascendant $\beta_e$ ayant la même valeur que l'angle descendant $\beta_a$.

2. Granulateur à cylindre broyeur selon la revendication 1, **caractérisé en ce que** le granulateur à cylindre broyeur (1) comporte un dispositif d'alimentation (17) pour acheminer un tuyau d'enrobage (18) contenant une matière de remplissage co-extrudée (19), les coussins de granulés respectifs à former (12) comportant des portions de matière de remplissage (19) qui sont enrobées d'une enveloppe extérieure en matériau du tuyau d'enrobage (18).

3. Granulateur à cylindre broyeur selon la revendication 1 ou la revendication 2, **caractérisé en ce que** la zone de broyage d'entrée (9) est configurée pour former une couture étanche d'entrée et la zone de broyage de sortie (11) pour former une couture étanche de sortie sur les coussins de granulés respectifs (12) à former et la zone de broyage centrale (10) pour former un profil de couture de rupture entre les coussins de granulés respectifs (12) à former.

4. Granulateur à cylindre broyeur selon une des revendications précédentes, **caractérisé en ce que** la zone de tête de dent (8) présente une arête d'entrée (21) en biseau par rapport à la zone de broyage d'entrée (9) et une arête de sortie (22) en biseau par rapport à la zone de broyage de sortie (11).

5. Granulateur à cylindre broyeur selon une des revendications précédentes, **caractérisé en ce que** la zone de broyage centrale (10) de la zone de tête de dent (8) du cylindre broyeur (3) présente un aplat (23) comme profil de couture de rupture.

6. Granulateur à cylindre broyeur selon une des revendications 1 à 4, **caractérisé en ce que** la zone de broyage centrale (10) de la zone de tête de dent (8) du cylindre broyeur (3) présente un décrochement (24) comme profil de couture de rupture.

7. Granulateur à cylindre broyeur selon une des revendications 1 à 4, **caractérisé en ce que** la zone de broyage centrale (10) de la zone de tête de dent (8) du cylindre broyeur (3) présente une section de nervure (25) faisant saillie au-dessus de la zone de broyage d'entrée (9) et de la zone de broyage de sortie (11).

8. Granulateur à cylindre broyeur selon une des revendications précédentes, **caractérisé en ce que** la zone de broyage de sortie (11) est plus longue que la zone de broyage d'entrée (9).

9. Granulateur à cylindre broyeur selon une des revendications précédentes, **caractérisé en ce que** le cylindre broyeur (3) et le cylindre compresseur (2) présentent un alliage métallique, la surface cylindrique du cylindre compresseur (2) et les zones de têtes de dents (8) du cylindre broyeur (3) présentant des surfaces résistantes à l'usure, de préférence des surfaces trempées ou des surfaces de revêtement en métaux durs ou revêtement céramique.

10. Granulateur à cylindre broyeur selon une des revendications 2 à 9, **caractérisé en ce que** le tuyau d'enrobage (18) est en des matériaux thermoplastiques du groupe polyamide (PA), polypropylène (PP), polyéthylène faible densité (LDPE), copolymère, ou éthylène-copolymère alcool de vinyle (EVOH), copolymère éthylène acétate de vinyle (EVA) ou en mélanges de ces produits avec des proportions de cire polyoléfine, de cire polyéthylène, cire polypropylène ou dérivés d'acides gras.

11. Granulateur à cylindre broyeur selon une des revendications précédentes, **caractérisé en ce que** le cylindre broyeur (3) comporte des dents hélicoïdales (26) avec un angle de dents hélicoïdales $\alpha$ compris entre

$$\arctan \pi D/nB \leq \alpha \leq 5 \arctan \pi D/nB$$

D étant le diamètre extérieur du cylindre broyeur (3), B la largeur du cylindre broyeur (3) et n le nombre de dents (4) réparties sur la circonférence extérieure du cylindre broyeur (3).

12. Granulateur à cylindre broyeur selon une des revendications précédentes, **caractérisé en ce qu'**un coussin de granulés (12) présente une longueur l de

$$l \leq \pi D/n$$

avec un nombre n de dents (4) réparties sur la circonférence extérieure du cylindre broyeur (3) et un diamètre extérieur D du cylindre broyeur (3), ainsi qu'une largeur b de

$$b \leq B/N$$

B étant la largeur du cylindre broyeur (3) et N le nombre de tuyaux d'enrobage (18) acheminés en parallèle vers le cylindre broyeur (3) contenant une matière de remplissage co-extrudée (19)
N étant

$$N \leq 2B/\pi d$$

d étant le diamètre extérieur du tuyau d'enrobage (18).

13. Installation de granulation avec un granulateur à cylindre broyeur selon une des revendications 1 à 12, **caractérisée en ce que** l'installation de granulation (100) comporte une extrudeuse (27) pour la co-extrusion de matière de remplissage (19) dans des tuyaux d'enrobage (18) en des boudins de matière plastique (28), un dispositif d'alimentation (17) pour acheminer les boudins de matière plastique (28) vers une paire de cylindres composée du cylindre compresseur (2) et du cylindre broyeur denté (3), un entraînement pour le cylindre broyeur (3) et un dispositif de collecte (29) pour recevoir les boudins de matière plastique (28) divisés en coussins de granulés (12) par la paire de cylindres constitués d'une enveloppe extérieure et une matière de remplissage co-extrudée (19), un dispositif de commande et de régulation du granulateur à cylindre broyeur (1) coordonnant l'entraînement du cylindre broyeur (3) avec la vitesse d'extrusion des boudins de matière plastique(28).

14. Utilisation du granulateur à cylindre broyeur(1) selon une des revendications précédentes pour la fabrication de coussins de granulés (12) contenant une matière de remplissage (19) pulvérulente, liquide, visqueuse ou plastique.

15. Utilisation du granulateur à cylindre broyeur (1) selon une des revendications 1 à 13 pour la répartition en portions de matière de remplissage (19) pharmaceutique, médicamenteuse, cosmétique, adhésive ou emballée stérilement dans des coussins de granulés (12) avec une enveloppe extérieure.

FIG 1

FIG 2

FIG 3

FIG     4

FIG     5

FIG 6

FIG 7

FIG 8

**FIG 9A**

**FIG 9B**

**FIG 9C**

**FIG 9D**

**FIG 9E**

**FIG 9F**

FIG 9G

FIG 9H

FIG 9I

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3145614 C2
- DE 10347908 A1
- DE 3832566 C2
- DE 1297525 A
- DE 2627263 B1
- EP 1066938 A1
- JP S59081120 A
- EP 0143414 A2